# EUROPÄISCHE PATENTSCHRIFT

(11) **EP 3 464 850 B1**
(45) Veröffentlichungstag und Bekanntmachung des Hinweises auf die Patenterteilung: **01.09.2021**
(21) Anmeldenummer: 17724072.8
(22) Anmeldetag: 18.05.2017
(51) Int. Cl.: F01N 3/28, F28F 3/02

(54) **WABENKÖRPER FÜR DIE ABGASNACHBEHANDLUNG**
HONEYCOMB BODY FOR EXHAUST GAS AFTERTREATMENT
CORPS EN NID D'ABEILLES POUR LE POST-TRAITEMENT DES GAZ D'ÉCHAPPEMENT

(30) Priorität: 25.05.2016 DE 102016209058
(43) Veröffentlichungstag der Anmeldung: 10.04.2019
(73) Patentinhaber: Vitesco Technologies GmbH, 30165 Hannover (DE)
(72) Erfinder: HIRTH, Peter, 51503 Rösrath (DE); PABST, Christoph, 49326 Melle (DE)
(86) Internationale Anmeldenummer: PCT/EP2017/062041
(87) Internationale Veröffentlichungsnummer: WO 2017/202696

(56) Entgegenhaltungen:
- EP-A2- 0 298 943
- WO-A1-2010/016792
- DE-A1-102004 001 947
- DE-C1- 10 020 170
- GB-A- 2 001 547
- US-A- 4 672 809

## Beschreibung

### Technisches Gebiet

Die Erfindung betrifft einen Wabenkörper für eine Abgasnachbehandlungseinheit, mit einer Mehrzahl von aufeinander gestapelten Lagen, wobei im Wesentlichen glatte Lagen und zumindest teilweise strukturierte Lagen abwechselnd aufeinander gestapelt sind, wobei zwischen den Lagen Strömungskanäle ausgebildet sind, die entlang der axialen Erstreckung des Wabenkörpers verlaufen und in axialer Richtung durchströmbar sind, wobei die strukturierten Lagen Wellungen aufweisen, die durch aufeinanderfolgende Wellenberge und Wellentäler gebildet sind, wobei aus zueinander benachbart angeordneten Wellentälern einer strukturierten Lage Ausstülpungen in Richtung der zur jeweiligen Lage gehörenden Wellenberge ausgebildet sind, wobei durch die benachbart zueinander angeordneten Ausstülpungen einer ersten strukturierten Lage eine in Umfangsrichtung des Wabenkörpers verlaufende kanalartige Struktur in der ersten strukturierten Lage ausgebildet ist, in welche eine zweite Lage derart eingelegt ist, dass die zweite Lage gegenüber der ersten strukturierten Lage in axialer Richtung fixiert ist.

### Stand der Technik

Wabenkörper werden im Wesentlichen aus keramischem Werkstoff oder als aus mehreren Lagen bestehende metallische Wabenkörper ausgebildet. Man unterscheidet bei metallischen Wabenkörpern vor allem zwei typische Bauformen.

Eine frühe Bauform, für die die DE 29 02 779 A1 typische Beispiele zeigt, ist die spiralförmige Bauform, bei der eine im Wesentlichen glatte und eine gewellte Blechlage aufeinandergelegt und spiralförmig aufgewickelt werden. Bei einer anderen Bauform wird der Wabenkörper aus einer Vielzahl von abwechselnd angeordneten glatten und gewellten oder unterschiedlich gewellten Blechlagen gebildet, wobei die Blechlagen zunächst in einem oder mehreren Stapeln angeordnet und dann miteinander verschlungen werden. Dabei kommen Enden aller Blechlagen außen zu liegen und können mit einem Gehäuse oder Mantelrohr verbunden werden, wodurch zahlreiche Verbindungen entstehen, die die Haltbarkeit des Wabenkörpers erhöhen. Typische Beispiele dieser Bauformen sind in der EP 0 245 737 B1 oder der WO 90/03220 beschrieben.

Besonders bei metallischen Wabenkörpern hat es sich gezeigt, dass sich diese beim Einsatz im Abgassystem eines Automobils im Verlaufe der Zeit aufgrund der thermischen Wechselbelastungen verformen. Insbesondere ist es bekannt, dass der Wabenkörper teleskopiert, das heißt, dass sich ein Teil des Wabenkörpers teilweise aufgrund der pulsierenden Gasströme, denen er ausgesetzt ist, aus einer Stirnseite des Wabenkörpers hinausschiebt, oder dass der Wabenkörper eine Tonnenform annimmt, also dass sich der Durchmesser des Wabenkörpers im Bereich der Gaseintritts- und/oder der Gasaustrittsseite verkleinert. Solche und andere Verformungen führen zu oder beruhen auf der Verschiebbarkeit von benachbarten Wänden der Hohlräume in Strömungsrichtung, die beispielsweise bei einer fehlenden oder fehlerhaften Anbindung an benachbarte Wände der Hohlräume, die bevorzugt durch thermische Fügeverfahren wie beispielsweise Löten oder Schweißen ausgebildet wird, auftreten kann.

Die WO 2010/016792 A1 offenbart ein Kanalsystem zur Verbesserung der Beziehung zwischen Druckabfall und Wärme-, Feuchtigkeits- und/oder Massenaustausch von durch das System strömenden Fluiden, wobei das Kanalsystem mindestens einen Kanal mit mindestens einem ersten und einem zweiten Strömungsrichter aufweist, wobei der Kanal eine Querschnittsfläche und einen ersten und einen zweiten Querschnitt am jeweiligen Strömungsrichter aufweist. Die Strömungsrichter erstrecken sich entlang einer Fluidströmungsrichtung und quer zu dem Kanal. Die Strömungsrichter weisen einen stromaufwärts gelegenen Abschnitt und einen stromabwärts gelegenene Abschnitt auf, sowie einen Zwischenabschnitt, welcher sich zwischen dem stromaufwärts liegenden und dem stromabwärts liegenden Abschnitt befindet.

Die US 4 672 809 A offenbart einen Katalysator für einen Dieselmotor besteht aus einem Labyrinth aus Metallfolie. Die Folie ist mit einem Oxidationskatalysator beschichtet. Wenn die Abgase durch das Labyrinth strömen, wird das Gas gezwungen, rechtwinklige Drehungen in Abständen von nur etwa 5 mm auszuführen. Die Anzahl der rechtwinkligen Umdrehungen kann bis zu 30 Umdrehungen pro Kubikzentimeter des Labyrinths betragen. Diese abrupten Drehungen führen dazu, dass sich Partikel im Gas auf der Folie ablagern. In Abständen wird Kraftstoff in das Abgas eingespritzt. Der Brennstoff verbrennt auf der katalysierten Oberfläche und heizt den Konverter ausreichend auf, um die eingefangenen Partikel zu verbrennen.

Die EP 0 298 943 A2 offenbart einen Katalysatorträger, der zwei übereinanderliegende Materialbahnen umfasst, die um eine Kernhülse gewickelt sind. Eine der Bahnen ist mit Querrippen versehen, die Kanäle bilden, die sich axial durch den Träger erstrecken. Die andere Bahn ist mit Rippen versehen, die mit Einkerbungen in den Rippen der ersten Bahn zusammenwirken, wodurch die Bahnen mechanisch miteinander verriegelt werden.

Die GB 2 001 547 A offenbart eine Trägermatrix für einen katalytischen Reaktor zur Reinigung von Abgasen in Verbrennungsmotoren, hergestellt aus hochtemperaturbeständigem Stahl, der aus abwechselnden Stahlplatten besteht, von denen mindestens eine gewellt ist und mindestens eine mit Vorsprüngen oder Vertiefungen versehen ist, die mit mindestens einer benachbarten Stahlplatte ineinandergreifen.

Nachteilig an den Vorrichtungen im Stand der Technik ist insbesondere, dass zu einer Erzeugung eines dauerhaltbaren Wabenkörpers Fügeverfahren wie das Löten oder das Schweißen eingesetzt werden müssen, um die Relativbewegung der Lagen in axialer Erstreckungsrichtung des Wabenkörpers zu verhindern.

Diese Verfahren bilden einen wesentlichen Teil des Herstellungsverfahrens eines Wabenkörpers und verteuern somit das Endprodukt wesentlich.

Darstellung der Erfindung, Aufgabe, Lösung, Vorteile

Daher ist es die Aufgabe der vorliegenden Erfindung einen Wabenkörper zu schaffen, welcher einen optimierten Aufbau aufweist und daher stabiler gegen eine axiale Verschiebung der Lagen zueinander ist. Auch ist es die Aufgabe einen Wabenkörper zu schaffen, bei welchem die einzelnen Lagen nicht durch ein zusätzliches Lötverfahren oder Schweißverfahren miteinander verbunden werden müssen.

Die Aufgabe hinsichtlich des Wabenkörpers wird durch einen Wabenkörper mit den Merkmalen von Anspruch 1 gelöst.

Ein Ausführungsbeispiel der Erfindung betrifft einen Wabenkörper für eine Abgasnachbehandlungseinheit, mit einer Mehrzahl von aufeinander gestapelten Lagen, wobei zwischen den Lagen Strömungskanäle ausgebildet sind, die entlang der axialen Erstreckung des Wabenkörpers verlaufen und in axialer Richtung durchströmbar sind, wobei der Wabenkörper erste strukturierte Lagen aufweist, wobei die Struktur durch aufeinanderfolgende Wellenberge und Wellentäler ausgebildet ist, wobei aus zueinander benachbart angeordneten Wellentälern einer ersten strukturierten Lage Ausstülpungen in Richtung der zur jeweiligen Lage gehörenden Wellenberge ausgebildet sind, wobei durch die benachbart zueinander angeordneten Ausstülpungen einer ersten strukturierten Lage eine in Umfangsrichtung des Wabenkörpers verlaufende kanalartige Struktur in der ersten strukturieren Lage ausgebildet ist, in welche eine zweite Lage derart eingelegt ist, dass die zweite Lage gegenüber der ersten strukturierten Lage in axialer Richtung fixiert ist, wobei durch die benachbart zueinander angeordneten Ausstülpungen einer ersten strukturierten Lage eine in Umfangsrichtung des Wabenkörpers verlaufende kanalartige Struktur in der ersten strukturierten Lage ausgebildet ist, in welche eine zweite Lage derart eingelegt ist, dass die zweite Lage gegenüber der ersten strukturierten Lage in axialer Richtung fixiert ist, eine Mehrzahl zweiter Lagen zwischen zwei zueinander benachbart angeordneten ersten strukturierten Lagen angeordnet ist, wobei die zweiten Lagen durch glatte Lagen und durch zweite strukturierte Lagen gebildet sind, wobei eine zweite Lage zwischen zwei zueinander benachbart angeordneten ersten strukturierten Lagen angeordnet ist, wobei die zweite Lage eine durch nebeneinander angeordneten Wellenbergen und Wellentälern gebildete gewellte Struktur aufweist, wobei die Wellenlänge der zweiten Lage geringer ist als die Wellenlänge der ersten strukturierten Lage.

Wabenkörper sind regelmäßig aus einer Mehrzahl von Lagen metallischer Folien gebildet. Alternativ können auch Vliese oder Gestricke eingesetzt werden. Die Lagen werden aufeinander gestapelt und in ein Gehäuse eingesetzt. In einer Vielzahl der Anwendungsfälle haben die Wabenkörper einen runden Querschnitt und die Lagen werden vor dem Einsetzen in ein Gehäuse aufgewickelt, um eine an den Querschnitt angepasste Form des Lagenstapels zu erzeugen.

Der Wabenkörper weist eine Erstreckungsrichtung in axialer Richtung auf, welche zumeist identisch ist mit der Hauptdurchströmungsrichtung des Wabenkörpers. Die Umfangsrichtung des Wabenkörpers ist quer zur axialen Erstreckungsrichtung orientiert und verläuft in Richtung des Umfangs des Wabenkörpers . Der Wabenkörper kann runde Querschnitte aufweisen oder auch eckige.

Erfindungsgemäß weist der Wabenkörper eine Mehrzahl von Lagen auf. Diese können zumindest teilweise strukturiert sein oder vollständig glatt ausgebildet sein. Die zumindest teilweise strukturierten Lagen können bevorzugt wellenförmige Querschnitte aufweisen. Wellenförmige Querschnitte bedingen, dass eine Aneinanderreihung von Wellenbergen und Wellentälern in der Lage ausgebildet ist. Über die Wellenlänge wird vereinfacht gesagt der Abstand der direkt zueinander benachbart angeordneten Wellenberge beziehungsweise der Wellentäler zueinander angegeben. Die Wellenberge und Welltäler stellen die Strukturmaxima dar. Dabei sind gewöhnlich die Wellenberge in die entgegengesetzte Richtung aus der ursprünglich glatten Lage ausgelenkt als die Wellentäler.

Im vorliegenden Fall sind mit Wellenbergen die Ausformungen der Lage in die jeweils erste Richtung gemeint und mit Wellentälern die Ausformungen der Lage in die jeweils zweite Richtung, welche entgegengesetzt zur ersten Richtung liegt. Die Begriffe Wellental oder Wellenberg charakterisieren somit nur die Ausformungen im Vergleich zueinander, bezeichnen einzeln betrachtet jedoch nicht eine bestimmte Ausformungsrichtung. Ein grundsätzlich als Wellental bezeichneter Bereich kann durch eine Drehung der Lage an sich somit per Definition grundsätzlich auch zum Wellenberg werden und umgekehrt.

Die Ausstülpungen beschreiben Teilbereiche der Wellenberge beziehungsweise Wellentäler, an denen das Material der strukturierten Lage aus dem restlichen wellenförmigen Muster ausgelenkt ist. Die Ausstülpungen sind insbesondere an dem höchsten beziehungsweise tiefsten Punkten der Wellenberge beziehungsweise Wellentäler angeordnet. Eine Ausstülpung kann beispielsweise durch das Eindrücken der Spitze eines Wellenberges entgegen der Ausformungsrichtung des Wellenberges selbst erzeugt werden.

Mit einer kanalartigen Struktur ist insbesondere eine Anordnung von mehreren Ausstülpungen gemeint, die in Umfangsrichtung des Wabenkörpers in einer Flucht miteinander liegen. In Umfangsrichtung betrachtet bilden die Ausstülpungen hierbei eine Art Kanal, der durch die benachbart zueinander angeordneten nicht ausgestülpten Bereiche der Wellentäler beziehungsweise Wellenberge zumindest abschnittsweise dreiseitig begrenzt ist. Durch die ausgestülpten Bereiche ergibt sich somit in Umfangsrichtung des Wabenkörpers quasi ein Negativschnitt zwischen der strukturierten Lage und einem rechteckigen Körper, der bis zur Tiefe des ausgestülpten Materials die Wellenberge beziehungsweise die Wellentäler schneidet.

In diese kanalartige Struktur ist bevorzugt eine glatte Lage eingelegt, die entweder als streifenförmiges Element ausgebildet ist und jeweils nur entlang einer einzelnen kanalartigen Struktur in diese eingelegt ist, oder in mehrere zueinander benachbart angeordnete kanalartige Strukturen einer strukturierten Lage. Hierzu können beispielsweise mehrere Abschnitte einer glatten Lage, die jeweils in eine kanalartige Struktur eingelegt werden können, über Verbindungselemente miteinander verbunden sein.

Durch die räumliche Begrenzung der kanalartigen Struktur insbesondere entlang der axialen Erstreckungsrichtung des Wabenkörpers ist eine Relativbewegung der glatten Lage gegenüber der strukturierten Lage entlang der axialen Erstreckungsrichtung des Wabenkörpers limitiert oder gänzlich ausgeschlossen.

Die Wellenlänge beschreibt hier vereinfacht gesagt den Abstand zwischen zwei aufeinanderfolgenden Wellenbergen beziehungsweise zwei aufeinanderfolgenden Wellentälern. Beispielsweise vom tiefsten Punkt des ersten Wellentals zum tiefsten Punkt des darauf folgenden Wellentals. Die Wellenlänge der zweiten Lage, die vorzugsweise eine gewellte Struktur aufweist, ist kürzer als die Wellenlänge der ersten Lagen, zwischen welchen die zweite Lage angeordnet ist. Dadurch wird verhindert, dass die zweite Lage sich in Umfangsrichtung des Wabenkörpers mit der ersten Lage verhaken kann indem die durch die Wellenberge und Wellentäler gebildeten Maxima in die Wellenberge oder Wellentäler der ersten Lage eingreifen. Bevorzugt ist die Wellenläge insbesondere kleiner als die Länge der durch die Ausstülpungen gebildeten Auflageflächen der ersten Lagen in Umfangsrichtung des Wabenkörpers.

Durch eine zusätzliche zweite glatte Lage, die zwischen einer strukturierten zweiten Lage und der ersten Lage angeordnet wird, kann das Verhaken der einzelnen Lagen in Umfangsrichtung des Wabenkörpers besonders effektiv verhindert werden.

Besonders vorteilhaft ist es, wenn die Ausstülpungen eine in axialer Richtung des Wabenkörpers begrenzte Erstreckung aufweisen. Durch diese Begrenzung der Ausstülpungen wird die kanalartige Struktur erst ausgebildet, so dass eine Begrenzung der Relativbewegung von einer glatten Lage gegenüber einer strukturierten Lage überhaupt erst ermöglicht wird.

Weiterhin ist es zweckmäßig, wenn die Wellenlänge der gewellten zweiten Lage derart gering ist, dass die direkt zueinander benachbart angeordneten Wellenberge beziehungsweise die direkt zueinander benachbart angeordneten Wellentäler in Anlage miteinander sind. Dadurch wird das Einhaken der zweiten Lage in der ersten Lage in Umfangsrichtung des Wabenkörpers besonders effektiv verhindert.

Auch ist es vorteilhaft, wenn die kanalartige Struktur in axialer Richtung des Wabenkörpers durch die nicht ausgestülpten Bereiche der Wellentäler begrenzt ist. Dies dient der Begrenzung der räumlichen Erstreckung der kanalartigen Struktur in axialer Richtung des Wabenkörpers.

Ein bevorzugtes Ausführungsbeispiel ist dadurch gekennzeichnet, dass die Erstreckung der in die kanalartige Struktur eingelegten zweiten Lage in axialer Richtung des Wabenkörpers gleich groß oder geringer ist als die Erstreckung der Ausstülpungen in axialer Richtung des Wabenkörpers. Durch eine solche Gestaltung wird erreicht, dass die glatte Lage ohne eine notwendige Verformung in die kanalartige Struktur eingelegt werden kann und gegenüber der strukturierten Lage eine Einschränkung der Relativbewegung in axialer Richtung des Wabenkörpers erreicht wird. Besonders bevorzugt ist die Erstreckung der glatten Lage in axialer Richtung derart gewählt, dass diese passgenau in die kanalartige Struktur eingelegt werden kann.

Auch ist es zu bevorzugen, wenn zwei zueinander benachbart angeordnete erste strukturierte Lagen jeweils an den einander zugewandten Wellentälern Ausstülpungen aufweisen, wobei die Ausstülpungen der beiden ersten strukturierten Lagen voneinander weg hin zu den jeweiligen Wellenbergen weisen.

Hierdurch werden zwei einander zugewandte kanalartige Strukturen geschaffen, wobei jeweils eine kanalartige Struktur in jeweils einer der strukturierten Lagen ausgebildet ist. Wie bereits weiter oben erwähnt ist über die Bezeichnung Wellenberg oder Wellental jeweils die relative Ausrichtung der Wellungen bezogen auf eine einzelne strukturierte Lage definiert. Daher können die Wellenberge einer strukturierten Lage je nach Definition sowohl den Wellenbergen einer benachbarten strukturierten Lage zugewandt sein als auch den Wellentälern der benachbarten strukturierten Lage.

Darüber hinaus ist es vorteilhaft, wenn die Ausstülpungen einen wellenförmigen Querschnitt aufweisen. Dies ist vorteilhaft, da eine solche Form der Ausstülpung auf einfache Weise mit einem Tiefziehwerkzeug oder ähnlichem erzeugt werden können. Durch eine wellenförmige Gestaltung des Querschnitts kann zusätzlich ein weiterer Abschnitt eines Strömungskanals zwischen der Ausstülpung und einer an der Ausstülpung anliegenden glatten Lage erzeugt werden, wodurch die Durchströmung des Wabenkörpers insgesamt verbessert wird.

Weiterhin ist es vorteilhaft, wenn die kanalartige Struktur an einer ersten strukturierten Lage durch die in Umfangsrichtung zueinander in einer Flucht liegenden Ausstülpungen gebildet ist. Dies ist vorteilhaft, da sich dadurch eine kanalartige Struktur ergibt, die sich in Umfangsrichtung des Wabenkörpers erstreckt. Es wird dadurch insbesondere die Relativbewegung der Lagen zueinander in axialer Erstreckungsrichtung des Wabenkörpers minimiert oder gänzlich verhindert, wohingegen eine Relativbewegung der Lagen zueinander in Umfangsrichtung des Wabenkörpers möglich bleibt. Dies ist insbesondere im Rahmen der Herstellung vorteilhaft, da die Lagen hierbei oftmals um eine oder mehrere Achsen, die Achsparallel zur Mittelachse des Wabenkörpers ausgerichtet sind, gewickelt werden wodurch es zu einer Relativbewegung der Lagen in Umfangsrichtung zueinander kommen kann.

Auch ist es zweckmäßig, wenn die ersten strukturierten Lagen in axialer Richtung des Wabenkörpers zueinander beabstandet mehrere Ausstülpungen aufweisen, wobei durch die zueinander beabstandet angeordneten Ausstülpungen mehrere parallel zueinander in Umfangsrichtung des Wabenkörpers verlaufende kanalartige Strukturen ausgebildet sind. Dies ist vorteilhaft, um eine Unterbindung der Relativbewegung der Lagen zueinander in axialer Erstreckungsrichtung des Wabenkörpers entlang der gesamten axialen Erstreckung des Wabenkörpers zu erreichen und somit ein festeres Strukturgefüge zu erzeugen.

Darüber hinaus ist es vorteilhaft, wenn zwischen zwei zueinander benachbart angeordneten ersten strukturierten Lagen drei zweite Lagen angeordnet sind, wobei eine der zweiten Lagen durch eine gewellte Zwischenlage gebildet ist, wobei die gewellte Zwischenlage beidseitig auf einer durch eine glatten Lage gebildeten zweiten Lage aufliegt und in die kanalartigen Strukturen der jeweiligen ersten strukturierten Lagen eingreift.

Die Zwischenlage kann ebenfalls gewellt sein und dient einerseits zur Beabstandung der beiden strukturierten Lagen zueinander und weiterhin der weiteren Ausbildung von Abschnitten von Strömungskanälen. Die Zwischenlage ist dabei vorzugsweise derart gestaltet, dass zueinander benachbarte strukturierte Lagen beziehungsweise deren wellenförmige Ausformungen nicht miteinander verhaken, wodurch insbesondere die Fertigung erschwert werden würde, da eine für das Wickeln notwendige Relativbewegung in Umfangsrichtung des Wabenkörpers verhindert werden würde.

Weiterhin ist es zweckmäßig, wenn zwischen zwei strukturierten Lagen zwei glatte Lagen und eine Zwischenlage angeordnet sind, wobei jeweils eine glatte Lage in jeweils eine kanalartige Struktur einer der strukturierten Lagen eingelegt ist und die Zwischenlage zwischen den beiden glatten Lagen angeordnet ist, wobei die Zwischenlage in die beiden kanalartigen Strukturen eingreift und die beiden strukturierten Lagen zueinander beabstandet.

Hierdurch wird ein Aufbau erzeugt, der sicher die Relativbewegung von zueinander benachbart angeordneten Lagen in axialer Erstreckungsrichtung des Wabenkörpers verhindert. Durch die glatten Lagen zwischen der Zwischenlage und den strukturierten Lagen ist zudem wirkungsvoll ein Verhaken der einzelnen Lagen bei einer Relativbewegung in Umfangsrichtung vermieden.

Darüber hinaus ist es vorteilhaft, wenn durch den Eingriff der strukturierten Zwischenlage in die kanalartigen Strukturen der ersten strukturierten Lagen die Relativbewegung zwischen zwei zueinander benachbart angeordneten ersten strukturierten Lagen in axialer Richtung des Wabenkörpers limitiert ist. Dies erhöht die Stabilität des Wabenkörpers und macht zudem eine beispielsweise durch Verlöten erzeugte Fixierung zur Verhinderung der Relativbewegung in axialer Richtung überflüssig.

Auch ist es zu bevorzugen, wenn zwei zueinander direkt benachbart angeordnete strukturierte Lagen derart ausgerichtet sind, dass die Wellenberge beziehungsweise die Wellentäler miteinander in einer Flucht liegen. Dies ist besonders der Ausgestaltung der Strömungskanäle dienlich, da somit entlang der axialen Erstreckungsrichtung betrachtet längere Strömungsabschnitte ausgebildet werden, wodurch weniger Verwirbelungen bei der Durchströmung des Wabenkörpers entstehen und der Druckverlust reduziert wird.

Weiterhin ist es zweckmäßig, wenn eine erste strukturierte Lage in axialer Richtung des Wabenkörpers abwechselnd in Richtung der Wellenberge ausgestülpte Wellentäler aufweist und in Richtung der Wellentäler ausgestülpte Wellenberge aufweist.

Auch ist es vorteilhaft, wenn die erste strukturierte Lage durch die Anordnung der Ausstülpungen abwechselnd auf der Oberseite und der Unterseite jeweils durch die Ausstülpungen gebildete kanalartige Strukturen aufweist, wobei die kanalartigen Strukturen in axialer Richtung des Wabenkörpers zueinander beabstandet angeordnet sind.

Dies ist vorteilhaft um strukturierte Lagen zu erzeugen, die beidseitig eine kanalartige Struktur zum Einlegen von glatten Lagen aufweisen. Dies ist insbesondere in Hinsicht darauf, dass oft eine Vielzahl von unterschiedlichen Lagen aufeinandergestapelt wird besonders hilfreich. Somit können beliebig skalierbare Stapel von Lagen erzeugt werden, wobei jeweils beidseitig auf eine strukturierte Lage eine glatte Lage folgt, auf welche jeweils wieder eine Zwischenlage gefolgt von einer weitere glatten Lage und schließlich der nächsten strukturierten Lage folgt.

Darüber hinaus ist es vorteilhaft, wenn zumindest eine strukturierte Lage sowohl in Richtung der Wellenberge ausgestülpte Wellentäler aufweist als auch in Richtung der Wellentäler ausgestülpte Wellenberge aufweist, wobei die Ausstülpungen der Wellenberge, die einseitig eine kanalartige Struktur ausbilden, und die Ausstülpungen der Wellentäler, die auf der gegenüberliegenden Seite eine kanalartige Struktur ausbilden, in axialer Richtung des Wabenkörpers nicht zueinander versetzt angeordnet sind. Dies ist vorteilhaft, um beidseitig der strukturierten Lage kanalartige Strukturen zu erzeugen, die in axiale Erstreckungsrichtung des Wabenkörpers nicht zueinander versetzt angeordnet sind.

Darüber hinaus ist es vorteilhaft, wenn eine Mehrzahl von kanalartigen Strukturen parallel benachbart zueinander ausgebildet ist, wobei in jeder der kanalartigen Strukturen zumindest eine glatte Lage eingelegt ist, wobei die eingelegten glatten Lagen über Verbindungselemente miteinander verbunden sind.

Dies führt dazu, dass auch Wabenkörper mit einer längeren axialen Erstreckung eine ausreichende Festigkeit aufweisen und über die gesamte axiale Erstreckung des Wabenkörpers hinweg eine Limitierung der Relativbewegung der Lagen zueinander in axialer Richtung erreicht wird.

Außerdem ist es zu bevorzugen, wenn die Verbindungselemente über Teilbereiche einer ersten strukturierten Lage, welche die kanalartigen Strukturen ausbildet, ragen, wobei die erste strukturierte Lage im Bereich der Verbindungselemente ebenfalls glatt ausgebildet ist, so dass eine Relativbewegung zwischen den Verbindungselementen und der ersten strukturierten Lage in Umfangsrichtung des Wabenkörpers möglich ist.

Dies kann realisiert werden durch eine glatte Lage die Ausstanzungen aufweist, durch welche die jeweils strukturierten Bereiche der benachbarten strukturierten Lagen hindurchragen können. Im Bereich der kanalartigen Strukturen der strukturierten Lagen ist die glatte Lage bandförmig und passgenau zu der jeweiligen kanalartigen Struktur ausgebildet. Die Verbindung zwischen diesen in die kanalartige Struktur eingelegten Bereichen der glatten Lage wird durch Stege erreicht. Um eine Relativbewegung der Lagen zueinander in Umfangsrichtung zu ermöglichen, wie sie beispielsweise bei der Herstellung, insbesondere beim Aufwickeln der Lagen, entsteht, sind die strukturierten Folien in dem Bereich der Stege glatt ausgebildet oder zumindest mit einer Struktur, die so geringe Auslenkungen aufweist, dass eine Relativbewegung der glatten Lage in Umfangsrichtung gegenüber der strukturierten Lage möglich ist.

Die Verbindungselemente sind bevorzugt an den in Umfangsrichtung betrachtet außenliegenden Endbereichen der glatten Lage angeordnet. Dies hat den Vorteil, dass die Verbindungselemente nicht zwischen einzelnen Wellenbergen oder Wellentälern angeordnet sind. Die strukturierte Lage kann daher einfacher gestaltet werden, da ein Verhaken der Verbindungselemente mit den Wellenbergen oder Wellentälern der strukturierten Lage verhindert ist. Insbesondere die bei der Herstellung auftretende Relativbewegung in Umfangsrichtung zwischen den strukturierten Lagen und den glatten Lagen kann somit problemlos stattfinden, ohne ein Verhaken der Lagen ineinander zu verursachen.

Vorteilhaft weist die glatte Lage hierzu eine längere Erstreckung entlang der Umfangsrichtung auf als die strukturierte Lage, um sicherzustellen, dass die Verbindungselemente an beiden in Umfangsrichtung liegenden Endbereichen außerhalb der strukturierten Bereiche der strukturierten Lage liegen.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:

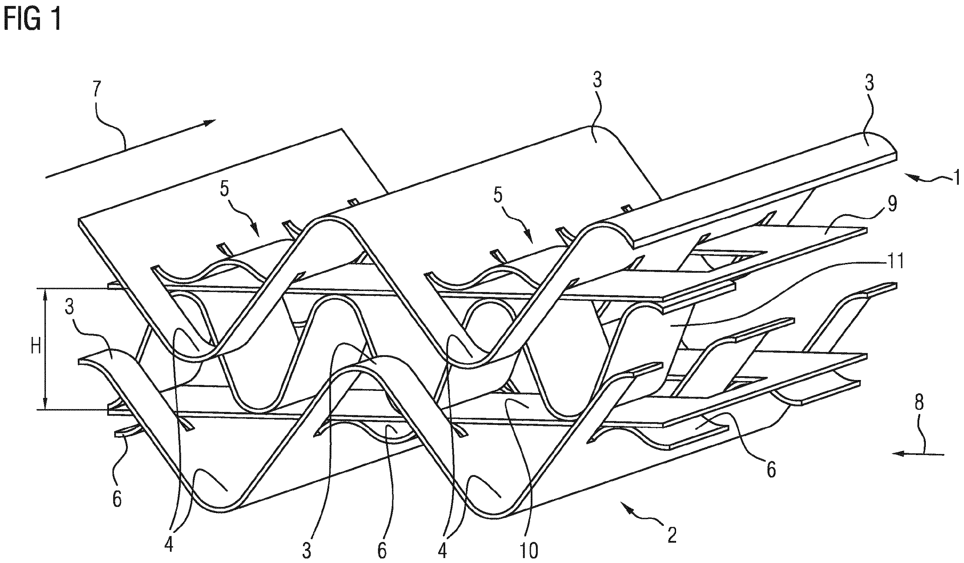

- Fig. 1: eine perspektivische Ansicht eines Teilausschnitts aus einem Lagenstapel eines Wabenkörpers, wobei zwei zueinander benachbart angeordnete strukturierte Lagen mit zwei dazwischen angeordneten glatten Lagen und einer dazwischen angeordneten gewellten Zwischenlage gezeigt sind,

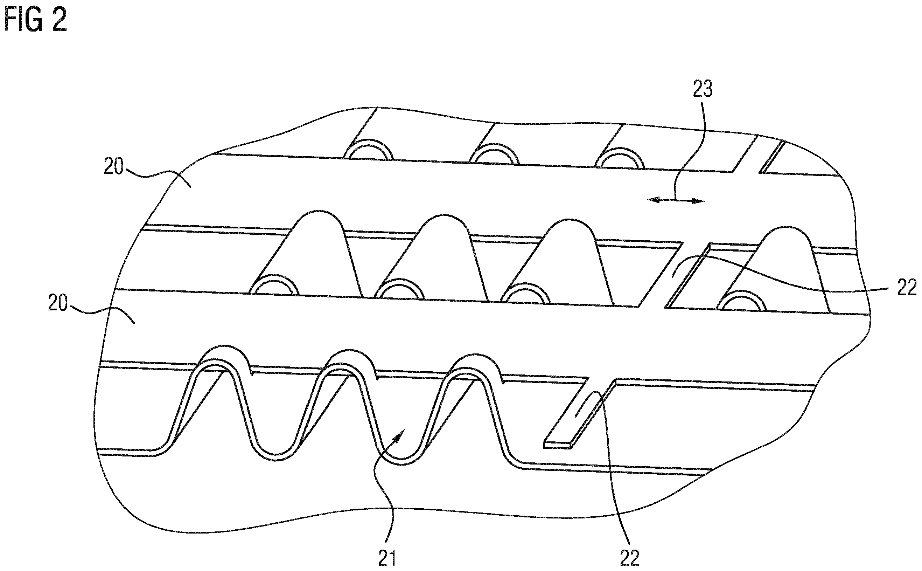

- Fig. 2: eine Ansicht eines Ausführungsbeispiels, wobei die Abschnitte der glatten Lage, die in zueinander benachbarten kanalartigen Strukturen eingelegt sind, über Stege miteinander verbunden sind,

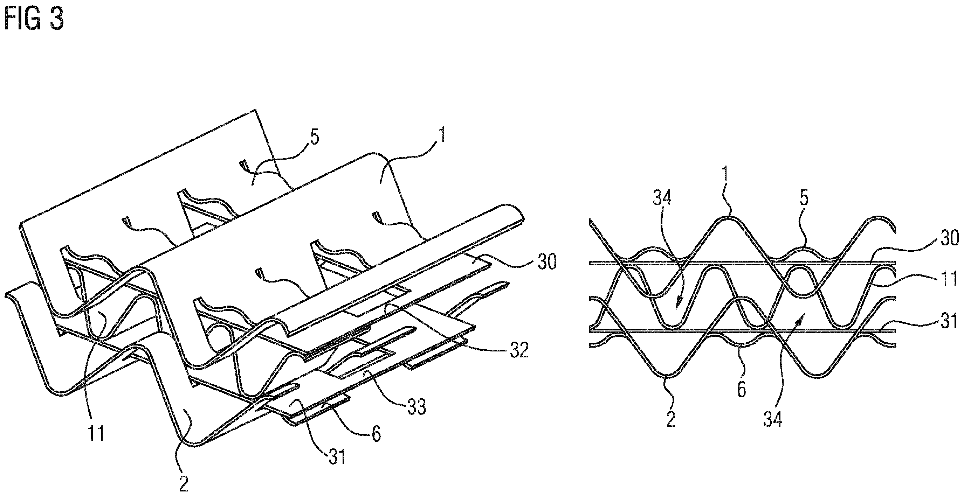

- Fig. 3: zeigt im linken Teil eine perspektivische Ansicht eines Lagenstapels, wobei die Verbindungselemente zwischen den in den kanalartigen Strukturen eingelegten glatten Bereichen außerhalb der Wellung der strukturierten Lage angeordnet sind, außerdem zeigt der rechte Teil der Figur eine Ansicht des Lagenstapels entlang der Hauptdurchströmungsrichtung der durch die Lagen ausgebildeten Strömungskanäle, und

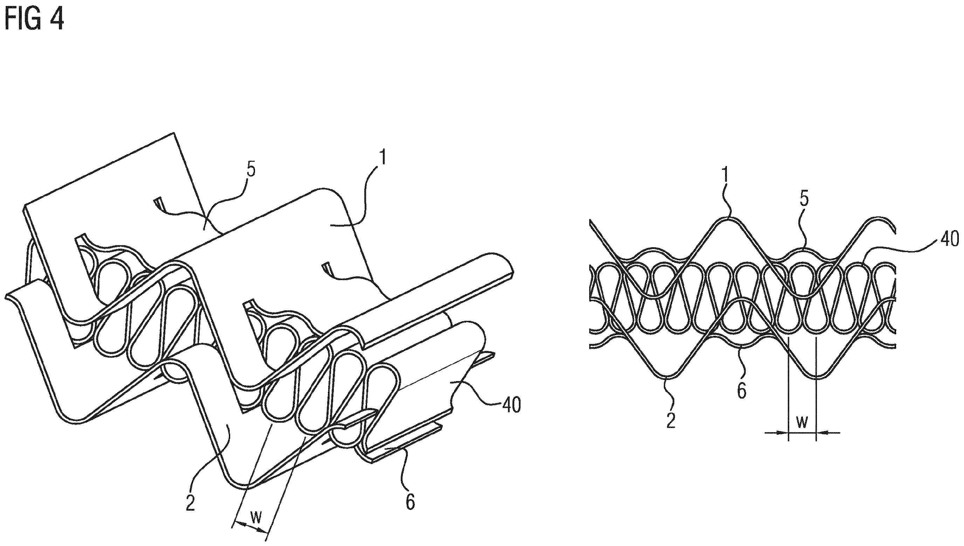

- Fig. 4: zeigt im linken Teil eine perspektivische Ansicht eines Lagenstapels, welcher nicht Teil der Erfindung ist, wobei zwischen zwei strukturierten Lagen eine weitere strukturierte beziehungsweise gewellte Lage angeordnet ist, wobei die Wellenlänge der einzelnen Lagen unterschiedlich ist, außerdem zeigt der rechte Teil der Figur eine Ansicht des Lagenstapels entlang der Hauptdurchströmungsrichtung der durch die Lagen ausgebildeten Strömungskanäle.

### Bevorzugte Ausführung der Erfindung

Die Figur 1 zeigt eine perspektivische Ansicht eines Stapels aus mehreren Lagen 1, 2, 9, 10 und 11. Die Lagen 1, 2, 9, 10 und 11 sind beispielsweise durch Metallfolien gebildet. Figur 1 zeigt dabei lediglich einen Teilausschnitt eines Wabenkörpers. Oberhalb und unterhalb des gezeigten Ausschnitts ist eine Vielzahl weiterer Lagen angeordnet.

Bezogen auf den vollständigen Wabenkörper, welcher in Figur 1 nur in Form eines kleinen Ausschnitts gezeigt ist, verläuft die axiale Erstreckungsrichtung des Wabenkörpers entlang des Pfeils 7. In dieser axialen Erstreckungsrichtung 7 findet auch die Hauptdurchströmung des Wabenkörpers statt. Die Richtung, die durch den Pfeil 8 gekennzeichnet ist, entspricht der Umfangsrichtung des Wabenkörpers.

In Figur 1 sind zwei zueinander benachbart angeordnete strukturierte Lagen 1, 2 gezeigt. Die strukturierten Lagen 1, 2 weisen ein gewelltes Profil auf, wobei jede der strukturierten Lagen 1, 2 abwechselnd Wellenberge 3 und Wellentäler 4 aufweist. Die Wellenberge 3 und die Wellentäler 4 bilden die Strukturmaxima der jeweiligen strukturierten Lage 1, 2 aus.

Die Wellentäler 4 der oberen strukturierten Lage 1 weisen Ausstülpungen 5 auf, die aus der Spitze der Wellentäler 4 hin zu den jeweiligen Wellenbergen 3 der strukturierten Lage 1 ausgeformt sind.

Die untere strukturierte Lage 2 weist Ausstülpungen 6 auf, welche von den Spitzen der Wellenberge 3 hin zu den Wellentälern 4 der strukturierten Lage 2 ausgeformt sind.

Die Ausstülpungen 5, 6 weisen einen wellenförmigen Querschnitt auf. Durch die Ausstülpungen 5, 6 wird in jeder der strukturierten Lagen 1, 2 eine kanalartige Struktur ausgebildet, die seitlich, also in axialer Erstreckungsrichtung 7 des Wabenkörpers, durch die jeweiligen Wellberge 3 oder Wellentäler 4, aus denen die Ausstülpungen 5, 6 ausgeformt sind, begrenzt wird.

Im Ausführungsbeispiel der Figur 1 weisen sowohl die strukturierten Lagen 1 und 2 als auch die Zwischenlage 11 eine wellenförmige Form auf. In alternativen Ausgestaltungen können auch andersförmige Wellungen, wie beispielsweise V-förmige, W-förmige oder mehreckige Wellenprofile vorgesehen werden. Gleiches gilt für den Querschnitt der Ausstülpungen 5 und 6, welcher in einer alternativen Ausführung auch glatt sein kann.

Die Wellentäler 4 der beiden strukturierten Lagen 1, 2 liegen ebenso wie die Wellenberge 3 in Figur 1 miteinander in einer Flucht. Während des Montageprozesses kann es insbesondere während des Wickelns des Wabenkörpers zu Relativbewegungen entlang der Umfangsrichtung 8 des Wabenkörpers kommen, wodurch sich die Lage der Wellentäler 4 und der Wellenberge 3 der beiden strukturierten Lagen 1, 2 relativ zueinander verändern kann.

In einer Sicht entlang der Umfangsrichtung 8 des Wabenkörpers wird durch die Ausstülpungen 5, 6 ein rechteckiger Ausschnitt in den jeweiligen Wellenbergen 3 und Wellentälern 4 erzeugt.

In diese kanalartige Struktur ist jeweils eine glatte Lage 9 beziehungsweise 10 eingelegt. Die glatten Lagen 9, 10 liegen dabei an den Ausstülpungen 5, 6 an und sind in axialer Erstreckungsrichtung 7 gegenüber den jeweiligen Wellenbergen 3 und Wellentälern 4 abgestützt.

Zwischen den glatten Lagen 9, 10 ist eine Zwischenlage 11 angeordnet, die ebenfalls wellig ausgestaltet ist. Die Höhe H der Zwischenlage ist vorteilhaft derart gewählt, dass die Wellentäler 4 der oberen strukturierten Lage 1 und die Wellenberge 3 der unteren strukturierten Lage 2 bei einer Relativbewegung entlang der Richtung 8 zueinander nicht miteinander in Kontakt geraten und so ein Verhaken vermieden wird.

Der Vorteil einer wie in Figur 1 gestalteten Struktur des Wabenkörpers liegt darin, dass durch die Ausgestaltung der Ausstülpungen 5, 6 ein Verhaken der unterschiedlichen Lagen 1, 2, 9, 10 und 11 entlang der axialen Richtung 7 erzeugt wird, während gleichzeitig eine Beweglichkeit entlang der Umfangsrichtung 8 erhalten bleibt. Somit kann wirkungsvoll das Teleskopieren des Wabenkörpers, also ein Auseinanderziehen der einzelnen Lagen in axialer Richtung 7 vermieden werden. Gleichzeitig kann die zumindest bei der Herstellung unvermeidlich auftretende Relativbewegung der Lagen 1, 2, 9, 10 und 11 in Umfangsrichtung 8 erlaubt werden, ohne dabei die durch die Wellungen erzeugten Strömungskanäle zu zerstören.

Aufgrund der mechanischen Limitierung der Relativbewegung der Lagen 1, 2, 9, 10 und 11 zueinander kann auf die Anwendung eines Fügeverfahrens, wie beispielsweise dem Löten oder dem Schweißen, nach dem Aufwickeln der Lagen 1, 2, 9, 10 und 11 zum Verbinden dieser miteinander vollständig verzichtet werden.

Die Figur 2 zeigt eine alternative Ausgestaltung eines Wabenkörpers, wobei die Bereiche der glatten Lage 20, die in die jeweiligen kanalartigen Strukturen der strukturierten Lage 21 eingelegt sind, über Stege 22 miteinander verbunden sind. Die Stege 22 sind dabei in Bereichen der strukturierten Lage 21 angeordnet, in welchen die strukturierte Lage 21 keine Wellung aufweist. Die strukturierte Lage 21 weist dementsprechend auch zumindest Teilbereiche auf die nicht strukturiert sind, sondern glatt ausgebildet sind.

Alternativ kann auch in diesen Bereichen der Stege 22 eine Struktur ausgebildet sein, sofern die Struktur eine derart niedrige Höhenerstreckung aufweist, dass ein Verhaken mit den Stegen 22 vermieden wird.

Durch die nicht oder wenig strukturierten Bereiche der strukturierten Lage 22 ist eine Relativbewegung der glatten Lage 20 gegenüber der strukturierten Lage 21 in Umfangsrichtung 23 des Wabenkörpers möglich, während durch die Anlage der bandförmigen Bereiche der glatten Lage 20 in den kanalartigen Strukturen der strukturierten Lage 21 eine Relativbewegung in axialer Richtung unterbunden ist.

Auf die glatte Lage 20 kann wie in dem Ausführungsbeispiel der Figur 1 gezeigt ebenfalls eine strukturierte Zwischenlage aufgelegt werden und auch weitere strukturierte Lagen 21 und glatte Lagen 20 folgen, um einen ausreichend hohen Lagenstapel zur Bildung des Wabenkörpers zu erzeugen.

In einer alternativen Ausgestaltung können die Bereiche der strukturierten Lage, die glatt ausgebildet sind oder nur eine geringe Höhe aufweisen auch zueinander versetzt angeordnet sein.

Die Figur 3 zeigt im linken Teil zwei strukturierte Lagen 1, 2 wie sie bereits in Figur 1 gezeigt sind. Zwischen den strukturierten Lagen 1, 2 sind Glattlagen 30, 31 angeordnet. Die Glattlagen 30, 31 weisen jeweils mehrere bandförmige Bereiche auf, die jeweils in einer der kanalartigen Strukturen eingelegt sind, die durch die Ausstülpungen 5, 6 in den strukturierten Lagen 1, 2 ausgebildet sind. Zwischen den glatten Lagen ist eine weitere strukturierte Lage 11 angeordnet, wie sie bereits in Figur 1 gezeigt wurde. Diese Lage dient der Beabstandung der glatten Lagen 30, 31 und der strukturierten Lagen 1, 2 zueinander.

Die bandförmigen Bereiche der Glattlagen 30, 31 sind über Stege 32, 33 miteinander verbunden, so dass die bandförmigen Bereiche und die Stege 32 insgesamt die Glattlage 30 bilden und die Stege 33 mit den zugehörigen bandförmigen Bereiche die Glattlage 31 bilden.

Die Stege 32 und 33 sind bevorzugt in Umfangsrichtung betrachtet in einem Bereich außerhalb der Wellung der strukturierten Lagen 1, 2 angeordnet. Dadurch kann eine Relativbewegung zwischen den strukturierten Lagen 1, 2 und den glatten Lagen 30, 31 stattfinden, ohne dass die Stege 32, 33 in die Wellung der strukturierten Lagen 1, 2 eingreifen und sich mit diesen Verhaken.

Eine Verbindung der bandförmigen Bereiche über Stege in diesem außerhalb der Wellung liegenden Bereich ist vorteilhaft, um die Montage der Lagenstapel zu erleichtern, da die Stege nicht an speziellen unstrukturierten Bereichen der strukturierten Lagen 1, 2 ausgerichtet werden müssen beziehungsweise die strukturierten Lagen 1, 2 gar keine unstrukturierten Bereiche aufweisen müssen.

Im rechten Teil der Figur 3 sind die Strömungskanäle 34 zu erkennen, die sich zwischen den einzelnen Lagen 1, 2, 30 und 31 aufgrund der unterschiedlichen Wellungen der Lagen 1, 2 und 11 ausbilden.

Das Ausführungsbeispiel der Figur 3 stellt eine Weiterentwicklung des Ausführungsbeispiels der Figur 2 dar, mit einer optimierten Anordnung der Stege 32 und 33.

Die Figur 4 zeigt in linken Teil eine alternative Ausgestaltung eines Lagenstapels, welcher nicht Teil der Erfindung ist. Dabei sind insbesondere die strukturierten Lagen 1, 2 gezeigt, die bereits in Figur 1 gezeigt wurden. Abweichend von Figur 1 ist in Figur 4 nur eine einzige Lage 40 zwischen den strukturierten Lagen 1, 2 angeordnet. Diese Zwischenlage 40 ist ebenfalls durch eine Wellung strukturiert. Die Lage 40 weist ähnlich den glatten Lagen 9, 10 der Figur 1 eine axiale Erstreckung auf, die es ermöglicht die Lage 40 in die kanalartigen Strukturen der strukturierten Lagen 1, 2 einzulegen.

Die Lage 40 weist eine Wellung auf, die eine wesentlich geringere Wellenlänge w besitzt als es die strukturierten Lagen 1, 2 tun. Im Ausführungsbeispiel der Figur 4 ist die Wellenlänge w so kurz, dass die direkt zueinander benachbarten Wellenberge und Wellentäler in Umfangsrichtung des Wabenkörpers aneinander anliegen. Dadurch wird vorteilhaft eine Zwischenlage 40 geschaffen, die einerseits eine sichere Beabstandung der strukturierten Lagen 1, 2 sicherstellt und weiterhin eine Relativbewegung in axialer Richtung des Wabenkörpers verhindert. Gleichzeitig ist durch die sehr kurze Wellenlänge w verhindert, dass die Wellenberge oder Wellentäler der Lage 40 sich mit den Wellenbergen oder Wellentälern der strukturierten Lagen 1 oder 2 verhaken und somit eine Relativbewegung in Umfangsrichtung zwischen den Lagen 1, 2 und 40 verhindern.

Die Wellenlänge w der Lage 40 muss dabei jeweils so klein bleiben, dass der Abstand in Umfangsrichtung zwischen zwei direkt zueinander benachbart angeordneten Wellenbergen oder Wellentälern geringer bleibt als die Länge in Umfangsrichtung der durch die Ausstülpungen gebildeten Auflageflächen an den strukturierten Lagen 1, 2. Andernfalls könnte es passieren, dass einer der Wellenberge oder eines der Wellentäler der Lage 40 in die Wellung der strukturierten Lagen 1 oder 2 tiefer als die Auflagefläche der Ausstülpung eingreift und so zu einer Verhakung führt. Die Ausführungsbeispiele der Figuren 1 bis 3 weisen insbesondere keinen beschränkenden Charakter auf und dienen der Verdeutlichung der die Erfindung definierenden Ansprüche. Die Merkmale der Ausführungsbeispiele der Figuren 1 bis 3 können auch miteinander kombiniert werden.

## Patentansprüche

1. Wabenkörper für eine Abgasnachbehandlungseinheit, mit einer Mehrzahl von aufeinander gestapelten Lagen (1, 2, 9, 10, 11, 20), wobei zwischen den Lagen (1, 2, 9, 10, 11, 20, 21) Strömungskanäle ausgebildet sind, die entlang der axialen Erstreckung (7) des Wabenkörpers verlaufen und in axialer Richtung (7) durchströmbar sind, wobei der Wabenkörper erste strukturierte Lagen (1, 2, 21) aufweist, wobei die Struktur durch aufeinanderfolgende Wellenberge (3) und Wellentäler (4) ausgebildet ist, wobei aus zueinander benachbart angeordneten Wellentälern (4) einer ersten strukturierten Lage (1, 2, 21) Ausstülpungen (5, 6) in Richtung der zur jeweiligen Lage (1, 2, 21) gehörenden Wellenberge (3) ausgebildet sind, wobei durch die benachbart zueinander angeordneten Ausstülpungen (5, 6) einer ersten strukturierten Lage (1, 2, 21) eine in Umfangsrichtung (8, 23) des Wabenkörpers verlaufende kanalartige Struktur in der ersten strukturieren Lage (1, 2, 21) ausgebildet ist, in welche eine zweite Lage (9, 10, 11, 20) derart eingelegt ist, dass die zweite Lage (9, 10, 20) gegenüber der ersten strukturierten Lage (1, 2, 21) in axialer Richtung (7) fixiert ist, **dadurchgekennzeichnet, dass** eine Mehrzahl zweiter Lagen (9, 10, 11, 20) zwischen zwei zueinander benachbart angeordneten ersten strukturierten Lagen (1, 2, 21) angeordnet ist, wobei die zweiten Lagen (9, 10, 11, 20) durch glatte Lagen (9, 10, 20) und durch zweite strukturierte Lagen (11) gebildet sind, wobei eine zweite Lage (11) zwischen zwei zueinander benachbart angeordneten ersten strukturierten Lagen (1, 2) angeordnet ist, wobei die zweite Lage (11) eine durch nebeneinander angeordneten Wellenbergen und Wellentälern gebildete gewellte Struktur aufweist, wobei die Wellenlänge (w) der zweiten Lage (11) geringer ist als die Wellenlänge der ersten strukturierten Lage (1, 2).

2. Wabenkörper nach Anspruch 1, **dadurch gekennzeichnet, dass** die Ausstülpungen (5, 6) eine in axialer Richtung (7) des Wabenkörpers begrenzte Erstreckung aufweisen.

3. Wabenkörper nach Anspruch 1, **dadurch gekennzeichnet, dass** die Wellenlänge (w) der gewellten zweiten Lage (11) derart gering ist, dass die direkt zueinander benachbart angeordneten Wellenberge beziehungsweise die direkt zueinander benachbart angeordneten Wellentäler in Anlage miteinander sind.

4. Wabenkörper nach einem der vorhergehenden Ansprüche, **dadurch gekennzeichnet, dass** die kanalartige Struktur in axialer Richtung (7) des Wabenkörpers durch die nicht ausgestülpten Bereiche der Wellentäler (4) begrenzt ist.

5. Wabenkörper nach einem der vorhergehenden Ansprüche, **dadurch gekennzeichnet, dass** die Erstreckung der in die kanalartige Struktur eingelegten zweiten Lage (9, 10, 20) in axialer Richtung (7) des Wabenkörpers gleich groß oder geringer ist als die Erstreckung der Ausstülpungen (5, 6) in axialer Richtung (7) des Wabenkörpers.

6. Wabenkörper nach einem der vorhergehenden Ansprüche, **dadurch gekennzeichnet, dass** zwei zueinander benachbart angeordnete erste strukturierte Lagen (1, 2) jeweils an den einander zugewandten Wellentälern (4) Ausstülpungen (5, 6) aufweisen, wobei die Ausstülpungen (5, 6) der beiden ersten strukturierten Lagen (1, 2) voneinander weg hin zu den jeweiligen Wellenbergen (3) weisen.

7. Wabenkörper nach einem der vorhergehenden Ansprüche, **dadurch gekennzeichnet, dass** die kanalartige Struktur an einer ersten strukturierten Lage (1, 2, 21) durch die in Umfangsrichtung (8, 23) zueinander in einer Flucht liegenden Ausstülpungen (5, 6) gebildet ist.

8. Wabenkörper nach einem der vorhergehenden Ansprüche, **dadurch gekennzeichnet, dass** die ersten strukturierten Lagen (1, 2, 21) in axialer Richtung (7) des Wabenkörpers zueinander beabstandet mehrere Ausstülpungen (5, 6) aufweisen, wobei durch die zueinander beabstandet angeordneten Ausstülpungen (5, 6) mehrere parallel zueinander in Umfangsrichtung des Wabenkörpers verlaufende kanalartige Strukturen ausgebildet sind.

9. Wabenkörper nach einem der vorhergehenden Ansprüche, **dadurch gekennzeichnet, dass** zwischen zwei zueinander benachbart angeordneten ersten strukturierten Lagen (1, 2) drei zweite Lagen (9, 10, 11) angeordnet sind, wobei eine der zweiten Lagen durch eine gewellte Zwischenlage (11) gebildet ist, wobei die gewellte Zwischenlage (11) beidseitig auf einer durch eine glatte Lage (9, 10) gebildeten zweiten Lage aufliegt und in die kanalartigen Strukturen der jeweiligen ersten strukturierten Lagen (1, 2) eingreift.

10. Wabenkörper nach Anspruch 9, **dadurch gekennzeichnet, dass** durch den Eingriff der strukturierten Zwischenlage (11) in die kanalartigen Strukturen der ersten strukturierten Lagen (1, 2) die Relativbewegung zwischen zwei zueinander benachbart angeordneten ersten strukturierten Lagen (1, 2) in axialer Richtung des Wabenkörpers limitiert ist.

11. Wabenkörper nach einem der vorhergehenden Ansprüche, **dadurch gekennzeichnet, dass** eine erste strukturierte Lage in axialer Richtung des Wabenkörpers abwechselnd in Richtung der Wellenberge ausgestülpte Wellentäler aufweist und in Richtung der Wellentäler ausgestülpte Wellenberge aufweist.

12. Wabenkörper nach Anspruch 11, **dadurch gekennzeichnet, dass** die erste strukturierte Lage durch die Anordnung der Ausstülpungen abwechselnd auf der Oberseite und der Unterseite jeweils durch die Ausstülpungen gebildete kanalartige Strukturen aufweist, wobei die kanalartigen Strukturen in axialer Richtung des Wabenkörpers zueinander beabstandet angeordnet sind.

13. Wabenkörper nach einem der vorhergehenden Ansprüche, **dadurch gekennzeichnet, dass** zumindest eine erste strukturierte Lage sowohl in Richtung der Wellenberge ausgestülpte Wellentäler aufweist als auch in Richtung der Wellentäler ausgestülpte Wellenberge aufweist, wobei die Ausstülpungen der Wellenberge, die einseitig eine kanalartige Struktur ausbilden, und die Ausstülpungen der Wellentäler, die auf der gegenüberliegenden Seite eine kanalartige Struktur ausbilden, in axialer Richtung des Wabenkörpers nicht zueinander versetzt angeordnet sind.

14. Wabenkörper nach einem der vorhergehenden Ansprüche, **dadurch gekennzeichnet, dass** eine Mehrzahl von kanalartigen Strukturen parallel benachbart zueinander ausgebildet ist, wobei in jeder der kanalartigen Strukturen zumindest eine glatte Lage (20) eingelegt ist, wobei die eingelegten glatten Lagen (20) über Verbindungselemente (22) miteinander verbunden sind.

15. Wabenkörper nach Anspruch 14, **dadurch gekennzeichnet, dass** die Verbindungselemente (22) über Teilbereiche einer ersten strukturierten Lage (21), welche die kanalartigen Strukturen ausbildet, ragen, wobei die erste strukturierte Lage (21) im Bereich der Verbindungselemente (22) ebenfalls glatt ausgebildet ist, so dass eine Relativbewegung zwischen den Verbindungselementen (22) und der ersten strukturierten Lage (21) in Umfangsrichtung (23) des Wabenkörpers möglich ist.

## Claims

1. Honeycomb body for an exhaust-gas aftertreatment unit, having a multiplicity of layers (1, 2, 9, 10, 11, 20) stacked one on top of the other, wherein flow channels are formed between the layers (1, 2, 9, 10, 11, 20, 21), which flow channels run along the axial extent (7) of the honeycomb body and can be flowed through in the axial direction (7), wherein the honeycomb body has first structured layers (1, 2, 21), wherein the structure is formed by successive undulation peaks (3) and undulation troughs (4), wherein, out of mutually adjacently arranged undulation troughs (4) of a first structured layer (1, 2, 21), there are formed protuberances (5, 6) in the direction of the undulation peaks (3) belonging to the respective layer (1, 2, 21), wherein, by means of the mutually adjacently arranged protuberances (5, 6) of a first structured layer (1, 2, 21), a channel-like structure running in a circumferential direction (8, 23) of the honeycomb body is formed in the first structured layer (1, 2, 21), into which channel-like structure a second layer (9, 10, 11, 20) is placed such that the second layer (9, 10, 20) is fixed relative to the first structured layer (1, 2, 21) in the axial direction (7), **characterized in that** a multiplicity of second layers (9, 10, 11, 20) is arranged between two mutually adjacently arranged first structured layers (1, 2, 21), wherein the second layers (9, 10, 11, 20) are formed by smooth layers (9, 10, 20) and/or by second structured layers (11), wherein a second layer (11) is arranged between two mutually adjacently arranged first structured layers (1, 2), wherein the second layer (11) has an undulating structure formed by mutually adjacently arranged undulation peaks and undulation troughs, wherein the undulation length (w) of the second layer (11) is shorter than the undulation length of the first structured layer (1, 2).

2. Honeycomb body according to Claim 1, **characterized in that** the protuberances (5, 6) have an extent delimited in the axial direction (7) of the honeycomb body.

3. Honeycomb body according to Claim 1, **characterized in that** the undulation length (w) of the undulating second layer (11) is so short that the mutually directly adjacently arranged undulation peaks or the mutually directly adjacently arranged undulation troughs are in contact with one another.

4. Honeycomb body according to any one of the preceding claims, **characterized in that** the channel-like structure is delimited in the axial direction (7) of the honeycomb body by the non-protruding regions of the undulation troughs (4).

5. Honeycomb body according to any one of the preceding claims, **characterized in that** the extent of the second layer (9, 10, 20), placed into the channel-like structure, in the axial direction (7) of the honeycomb body is equal to or shorter than the extent of the protuberances (5, 6) in the axial direction (7) of honeycomb body.

6. Honeycomb body according to any one of the preceding claims, **characterized in that** two mutually adjacently arranged first structured layers (1, 2) each have protuberances (5, 6) at the undulation troughs (4) facing one another, wherein the protuberances (5, 6) of the two first structured layers (1, 2) point away from one another toward the respective undulation peaks (3).

7. Honeycomb body according to any one of the preceding claims, **characterized in that** the channel-like structure at a first structured layer (1, 2, 21) is formed by the protuberances (5, 6) aligned with one another in the circumferential direction (8, 23).

8. Honeycomb body according to any one of the preceding claims, **characterized in that** the first structured layers (1, 2, 21) have multiple protuberances (5, 6) spaced apart from one another in the axial direction (7) of the honeycomb body, wherein multiple channel-like structures running parallel to one another in the circumferential direction of the honeycomb body are formed by the protuberances (5, 6) arranged spaced apart from one another.

9. Honeycomb body according to any one of the preceding claims, **characterized in that** three second layers (9, 10, 11) are arranged between two mutually adjacently arranged first structured layers (1, 2), wherein one of the second layers is formed by an undulating intermediate layer (11), wherein the undulating intermediate layer (11) lies at both sides on a second layer formed by a smooth layer (9, 10) and engages into the channel-like structures of the respective first structured layers (1, 2).

10. Honeycomb body according to Claim 9, **characterized in that** the relative movement between two mutually adjacently arranged first structured layers (1, 2) in the axial direction of the honeycomb body is limited by means of the engagement of the structured intermediate layer (11) into the channel-like structures of the first structured layers (1, 2).

11. Honeycomb body according to any one of the preceding claims, **characterized in that** a first structured layer has, in alternating fashion in the axial direction of the honeycomb body, undulation troughs protruding in the direction of the undulation peaks and undulation peaks protruding in the direction of the undulation troughs.

12. Honeycomb body according to Claim 11, **characterized in that** the first structured layer, owing to the arrangement of the protuberances, has channel-like structures in alternating fashion on the top side and on the bottom side, said channel-like structures being formed in each case by the protuberances, wherein the channel-like structures are arranged spaced apart from one another in the axial direction of the honeycomb body.

13. Honeycomb body according to any one of the preceding claims, **characterized in that** at least one first structured layer has both undulation troughs protruding in the direction of the undulation peaks and undulation peaks protruding in the direction of the undulation troughs, wherein the protuberances of the undulation peaks, which form a channel-like structure on one side, and the protuberances of the undulation troughs, which form a channel-like structure on the opposite side, are arranged so as not to be offset with respect to one another in the axial direction of the honeycomb body.

14. Honeycomb body according to any one of the preceding claims, **characterized in that** a multiplicity of channel-like structures is formed so as to be parallel and adjacent to one another, wherein at least one smooth layer (20) is placed in each of the channel-like structures, wherein the smooth layers (20) that have been placed in are connected to one another by means of connecting elements (22).

15. Honeycomb body according to Claim 14, **characterized in that** the connecting elements (22) project over partial regions of a first structured layer (21) which forms the channel-like structures, wherein the first structured layer (21) is likewise of smooth form in the region of the connecting elements (22), such that a relative movement between the connecting elements (22) and the first structured layer (21) in the circumferential direction (23) of the honeycomb body is possible.

## Revendications

1. Corps en nid d'abeilles pour une unité de post-traitement de gaz d'échappement, comprenant une pluralité de couches (1, 2, 9, 10, 11, 20) empilées les unes sur les autres, des conduits d'écoulement étant formés entre les couches (1, 2, 9, 10, 11, 20, 21), lesquels s'étendent le long de l'étendue axiale (7) du corps en nid d'abeilles et peuvent être traversés dans la direction axiale (7), le corps en nid d'abeilles comprenant des premières couches structurées (1, 2, 21), la structure étant formée par des crêtes d'ondulation (3) et des creux d'ondulation (4) successifs, des protubérances (5, 6) dans la direction des crêtes d'ondulation (3) appartenant à la couche respective (1, 2, 21) étant formées à partir de creux d'ondulation (4) adjacents les uns aux autres d'une première couche structurée (1, 2, 21), une structure en forme de conduit s'étendant dans la direction périphérique (8, 23) du corps en nid d'abeilles étant formée dans la première couche structurée (1, 2, 21) par les protubérances (5, 6) adjacentes les unes aux autres d'une première couche structurée (1, 2, 21), dans laquelle structure est insérée une deuxième couche (9, 10, 11, 20) de telle sorte que la deuxième couche (9, 10, 20) est fixée par rapport à la première couche structurée (1, 2, 21) dans la direction axiale (7), **caractérisé en ce qu'**une pluralité de deuxièmes couches (9, 10, 11, 20) est agencée entre deux premières couches structurées (1, 2, 21) adjacentes l'une à l'autre, les deuxièmes couches (9, 10, 11, 20) étant formées par des couches lisses (9, 10, 20) et par des deuxièmes couches structurées (11), une deuxième couche (11) étant agencée entre deux premières couches structurées (1, 2) adjacentes l'une à l'autre, la deuxième couche (11) comprenant une structure ondulée formée par des crêtes d'ondulation et des creux d'ondulation agencés les uns à côté des autres, la longueur d'ondulation (w) de la deuxième couche (11) étant plus petite que la longueur d'ondulation de la première couche structurée (1, 2).

2. Corps en nid d'abeilles selon la revendication 1, **caractérisé en ce que** les protubérances (5, 6) présentent une étendue limitée dans la direction axiale (7) du corps en nid d'abeilles.

3. Corps en nid d'abeilles selon la revendication 1, **caractérisé en ce que** la longueur d'ondulation (w) de la deuxième couche ondulée (11) est si petite que les crêtes d'ondulation directement adjacentes ou les creux d'ondulation directement adjacents sont en contact les uns avec les autres.

4. Corps en nid d'abeilles selon l'une quelconque des revendications précédentes, **caractérisé en ce que** la structure en forme de conduit est limitée dans la direction axiale (7) du corps en nid d'abeilles par les zones non protubérantes des creux d'ondulation (4).

5. Corps en nid d'abeilles selon l'une quelconque des revendications précédentes, **caractérisé en ce que** l'étendue de la deuxième couche (9, 10, 20) insérée dans la structure en forme de conduit dans la direction axiale (7) du corps en nid d'abeilles est inférieure ou égale à l'étendue des protubérances (5, 6) dans la direction axiale (7) du corps en nid d'abeilles.

6. Corps en nid d'abeilles selon l'une quelconque des revendications précédentes, **caractérisé en ce que** deux premières couches structurées (1, 2) adjacentes l'une à l'autre comprennent chacune des protubérances (5, 6) sur les creux d'ondulation (4) se faisant face, les protubérances (5, 6) des deux premières couches structurées (1, 2) étant orientées à distance l'une de l'autre vers les crêtes d'ondulation respectives (3).

7. Corps en nid d'abeilles selon l'une quelconque des revendications précédentes, **caractérisé en ce que** la structure en forme de conduit est formée sur une première couche structurée (1, 2, 21) par les protubérances (5, 6) alignées les unes avec les autres dans la direction périphérique (8, 23).

8. Corps en nid d'abeilles selon l'une quelconque des revendications précédentes, **caractérisé en ce que** les premières couches structurées (1, 2, 21) comprennent plusieurs protubérances (5, 6) espacées les unes des autres dans la direction axiale (7) du corps en nid d'abeilles, plusieurs structures en forme de conduit s'étendant parallèlement les unes aux autres dans la direction périphérique du corps en nid d'abeilles étant formées par les protubérances (5, 6) espacées les unes des autres.

9. Corps en nid d'abeilles selon l'une quelconque des revendications précédentes, **caractérisé en ce que** trois deuxièmes couches (9, 10, 11) sont agencées entre deux premières couches structurées (1, 2) adjacentes l'une à l'autre, une des deuxièmes couches étant formée par une couche intermédiaire ondulée (11), la couche intermédiaire ondulée (11) reposant des deux côtés sur une deuxième couche formée par une couche lisse (9, 10) et pénétrant dans les structures en forme de conduit des premières couches structurées respectives (1, 2).

10. Corps en nid d'abeilles selon la revendication 9, **caractérisé en ce que** le mouvement relatif entre deux premières couches structurées (1, 2) adjacentes l'une à l'autre dans la direction axiale du corps en nid d'abeilles est limité par la pénétration de la couche intermédiaire structurée (11) dans les structures en forme de conduit des premières couches structurées (1, 2) .

11. Corps en nid d'abeilles selon l'une quelconque des revendications précédentes, **caractérisé en ce qu'**une première couche structurée comprend des creux d'ondulation protubérants dans la direction des crêtes d'ondulation et des crêtes d'ondulation protubérantes dans la direction des creux d'ondulation en alternance dans la direction axiale du corps en nid d'abeilles.

12. Corps en nid d'abeilles selon la revendication 11, **caractérisé en ce que** la première couche structurée comprend des structures en forme de conduit formées respectivement par les protubérances par l'agencement des protubérances en alternance sur le côté supérieur et le côté inférieur, les structures en forme de conduit étant espacées les unes des autres dans la direction axiale du corps en nid d'abeilles.

13. Corps en nid d'abeilles selon l'une quelconque des revendications précédentes, **caractérisé en ce qu'**au moins une première couche structurée comprend aussi bien des creux d'ondulation protubérants dans la direction des crêtes d'ondulation que des crêtes d'ondulation protubérantes dans la direction des creux d'ondulation, les protubérances des crêtes d'ondulation, qui forment une structure en forme de conduit d'un côté, et les protubérances des creux d'ondulation, qui forment une structure en forme de conduit sur le côté opposé, n'étant pas agencées en décalage les unes des autres dans la direction axiale du corps en nid d'abeilles.

14. Corps en nid d'abeilles selon l'une quelconque des revendications précédentes, **caractérisé en ce qu'**une pluralité de structures en forme de conduit sont formées adjacentes les unes aux autres en parallèle, au moins une couche lisse (20) étant insérée dans chacune des structures en forme de conduit, les couches lisses insérées (20) étant reliées les unes aux autres par l'intermédiaire d'éléments de liaison (22).

15. Corps en nid d'abeilles selon la revendication 14 **caractérisé en ce que** les éléments de liaison (22) dépassent au-dessus de zones partielles d'une première couche structurée (21), qui forme les structures en forme de conduit, la première couche structurée (21) étant également configurée sous forme lisse dans la zone des éléments de liaison (22), de telle sorte qu'un mouvement relatif entre les éléments de liaison (22) et la première couche structurée (21) dans la direction périphérique (23) du corps en nid d'abeilles est possible.
